# FASCICULE DE BREVET EUROPEEN

(11) **EP 1 493 987 B1**
(45) Date de publication et mention de la délivrance du brevet: **08.04.2009**
(21) Numéro de dépôt: 04291521.5
(22) Date de dépôt: 17.06.2004
(51) Int. Cl.: F41G 7/30

(54) **Missile tournant émettant des impulsions lumineuses**
Rotierender, Lichtimpulse aussendender Flugkörper
Rotating missile, emitting light pulses

(30) Priorité: 04.07.2003 FR 0308183
(43) Date de publication de la demande: 05.01.2005
(73) Titulaire: MBDA France, 75016 Paris (FR)
(72) Inventeur: Leon, Fabienne, 92160 Antony (FR); Teneze, Bernard, 18570 Trouy (FR); Bernoux, Franck, 94240 L'Hay-Les-Roses (FR)
(74) Mandataire: Bonnetat, Christian

(56) Documents cités:
- WO-A-83/03894
- DE-A- 4 110 766
- US-A- 4 710 028

## Description

La présente invention concerne un missile tournant pourvu d'un émetteur d'impulsions lumineuses, adressées à un récepteur disposé à poste fixe (le poste de tir dudit missile) et aptes à servir à la localisation et au guidage dudit missile, comme cela est par exemple décrit dans le document US-4 710 028 (FR-2 583 523).

On sait qu'un tel émetteur peut comprendre une lampe à éclats, volumineuse et consommant une énergie importante, ou bien, de préférence, une source laser. Cependant, dans ce dernier cas, l'énergie laser émise doit être importante pour assurer une liaison optique de grande portée, résistant à un éventuel brouillage. Il en résulte donc des risques oculaires importants pour les opérateurs desdits missiles, notamment dans l'éventualité où le missile, par exemple par suite d'une panne de moteur intervenant immédiatement après son tir, tomberait au sol au voisinage du poste de tir où se trouvent ledit récepteur et lesdits opérateurs.

La présente invention a pour objet de remédier à cet inconvénient.

A cette fin, selon l'invention, le missile pourvu d'un émetteur d'impulsions lumineuses adressées à un récepteur disposé à poste fixe, ledit missile s'éloignant dudit récepteur tout en étant animé d'un mouvement de rotation autour de son axe longitudinal, est remarquable en ce qu'il comporte des moyens pour interrompre lesdites impulsions lumineuses lorsque ledit mouvement de rotation dudit missile cesse.

Ainsi, grâce à l'invention, puisque, lorsque ledit missile tombe au sol, sa rotation n'est plus possible, il n'existe plus aucun risque oculaire pour les opérateurs du missile en cas d'atterrissage prématuré et accidentel de celui-ci au voisinage du poste de tir.

Lesdits moyens d'interruption des impulsions lumineuses peuvent agir de différentes façons. Par exemple, ils peuvent masquer ledit émetteur. Cependant, de préférence, ils arrêtent le fonctionnement dudit émetteur, soit par action directe sur celui-ci, soit par action indirecte. Dans ce dernier cas, lorsque ledit émetteur est commandé par un dispositif électronique de commande, lesdits moyens d'interruption peuvent inhiber soit ce dernier, soit la liaison de commande entre ledit dispositif électronique de commande et ledit émetteur.

Dans le cas où, de façon connue, ledit missile comporte un détecteur de roulis émettant des impulsions de roulis dont chacune d'elles correspond à une position angulaire précise dudit missile autour de son axe longitudinal, il est avantageux que ledit détecteur de roulis commande lesdits moyens d'interruption des impulsions lumineuses.

De préférence, lesdits moyens d'interruption interrompent lesdites impulsions lumineuses avec retard par rapport à la détection de la première impulsion de roulis manquante. Par exemple, cette interruption intervient après une durée correspondant à au moins deux périodes des impulsions de roulis, ladite durée étant comptée à partir de la dernière impulsion de roulis détectée par ledit détecteur.

Dans un mode de réalisation avantageux, lesdits moyens d'interruption desdites impulsions lumineuses comportent un compteur systématique comptant en permanence à une fréquence supérieure à la fréquence desdites impulsions de roulis, ledit compteur systématique étant remis à zéro et réinitialisé par chaque impulsion de roulis qu'il reçoit, alors que, en cas d'absence d'impulsion de roulis, ledit compteur systématique émet un signal après le comptage jusqu'à un nombre prédéterminé, à partir de la dernière impulsion de roulis reçue.

Les figures du dessin annexé feront bien comprendre comment l'invention peut être réalisée. Sur ces figures, des références identiques désignent des éléments semblables.

La figure 1 illustre schématiquement le guidage d'un missile tournant à partir d'un poste de tir fixe.

La figure 2 montre schématiquement un détecteur de roulis pour le missile de la figure 1.

La figure 3 est un diagramme montrant schématiquement, en fonction du temps t, la suite des impulsions de roulis engendrées par le détecteur de la figure 2.

Les figures 4 à 6 sont des schémas synoptiques illustrant respectivement trois variantes de réalisation du dispositif d'interruption des impulsions lumineuses émises par le missile, conformément à la présente invention.

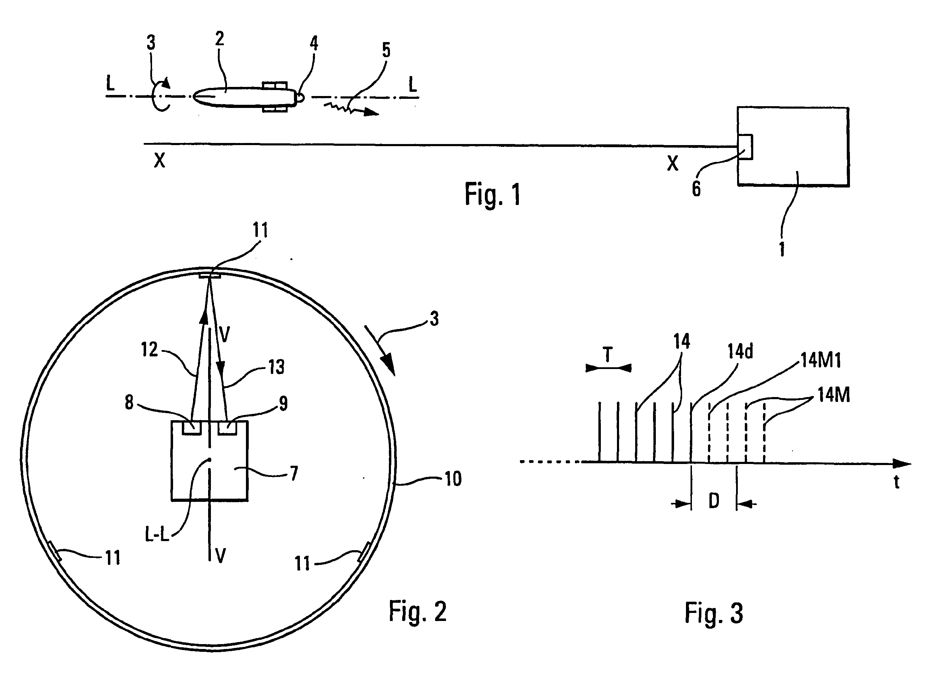

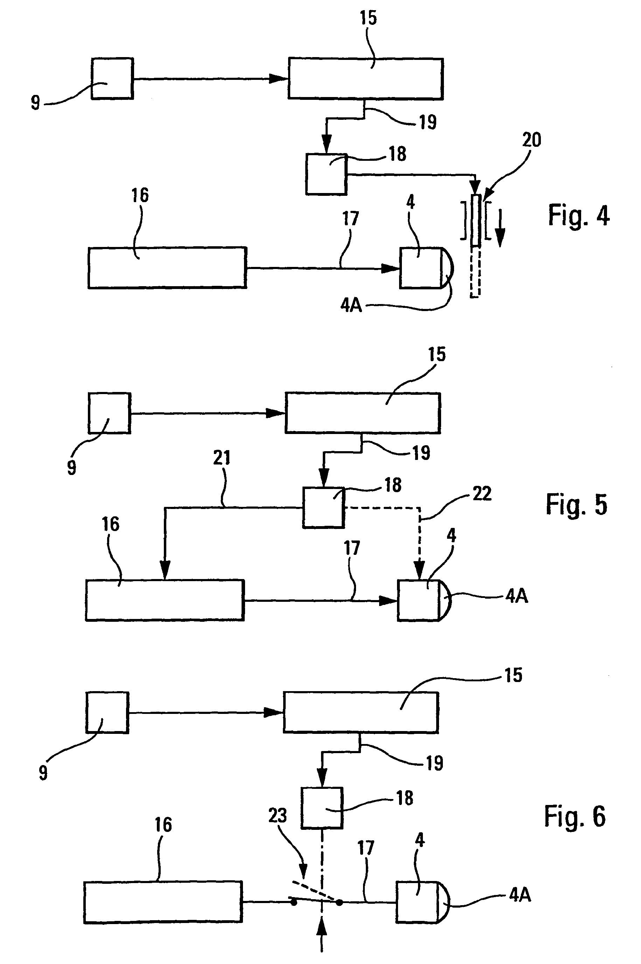

Sur la figure 1, on a représenté schématiquement un poste de tir 1, apte à guider un missile 2 par rapport à un axe de référence X-X (ligne de visée). Le missile 2 s'éloigne du poste de tir 1 tout en étant animé d'un mouvement de rotation autour de son axe longitudinal L-L. Ce mouvement de rotation a une vitesse Vr de par exemple 5 à 10 tours par seconde et est symbolisé par la flèche 3. Le missile 2 porte un émetteur laser 4, par exemple à diode laser ou à laser VCSEL 4A (voir figures 4 à 6), apte à émettre des impulsions laser 5 en direction du poste de tir 1. Ce dernier comporte un récepteur 6 pour recevoir lesdites impulsions laser 5.

Comme le montre schématiquement la figure 2, à l'intérieur du missile 2 est prévu un système gyroscopique 7, définissant une direction fixe V-V. Sur ce système gyroscopique 7 d'orientation fixe sont fixés une source lumineuse 8 et un récepteur correspondant 9. Par ailleurs, autour du système gyroscopique 7 est prévue une enveloppe 10, liée au missile 2 dans sa rotation autour de l'axe L-L. Cette enveloppe 10 porte plusieurs surfaces réfléchissantes ponctuelles 11, aptes à recevoir le faisceau lumineux incident 12 émis par la source 8 et à adresser le faisceau réfléchi 13 correspondant sur le récepteur 9. Les surfaces réfléchissantes 11 sont régulièrement réparties sur l'enveloppe 10, par exemple tous les 120° (comme représenté) ou tous les 45°.

Ainsi, à chaque fois qu'une surface réfléchissante 11 coupe le faisceau incident 12, le récepteur 9 reçoit une impulsion lumineuse, qu'il transforme en impulsion électrique de roulis 14 et, à chaque tour du missile 2 autour de son axe longitudinal L-L, sont engendrées autant d'impulsions électriques de roulis 14 que l'enveloppe 10 comporte de surfaces réfléchissantes 11. Bien entendu, la période T entre deux impulsions 14 successives est égale à T = 1 /Vrxn, Vr étant la vitesse de rotation du missile 2 sur lui-même (comme mentionné ci-dessus) et n étant le nombre de surfaces réfléchissantes (voir la figure 3).

Par ailleurs, comme le montrent les figures 4 à 6, le récepteur 9 est relié à un compteur 15, tandis que l'émetteur laser 4 est commandé par le dispositif électronique 16, auquel il est relié par une liaison 17. Le compteur 15 compte systématiquement à une fréquence supérieure à la fréquence 1/T des impulsions de roulis 14 et il est remis à zéro et réinitialisé par chacune desdites impulsions de roulis 14 qu'il reçoit du récepteur 9.

Ainsi, tant que le missile 2 tourne autour de son axe L-L, le compteur 15 est en permanence remis à zéro et réinitialisé par les impulsions de roulis 14 successives.

En revanche, si le missile 2 s'arrête de tourner autour de son axe L-L, par exemple parce qu'il a touché le sol, les impulsions de roulis 14 disparaissent et le compteur 1 5 compte à partir de la dernière impulsion de roulis 14d reçue --sans être remis à zéro ni réinitialisé par aucune impulsion 14-- jusqu'à un nombre prédéterminé correspondant à une durée D supérieure au temps T séparant la dernière impulsion 14d reçue de la première, référencée 14M1, des impulsions 14 manquantes, référencées 14M sur la figure 3. Comme cela est représentée sur la figure 3, la durée D est de préférence supérieure à 2T.

Lorsque ce nombre prédéterminé est compté par le compteur systématique 15, celui-ci adresse un signal de commande à des moyens d'actionnement 18, par l'intermédiaire d'une liaison 19.

Dès réception de ce dernier signal de commande, lesdits moyens d'actionnement 18 interrompent l'émission des impulsions laser 5 en commandant :
- soit un volet 20, qui vient masquer la diode laser ou le laser VCSEL 4A (figure 4) ;
- soit l'arrêt du dispositif électronique de commande 16 par une liaison 21 ou l'arrêt de l'émetteur 4 par une liaison 22 (figure 5) ;
- soit encore l'ouverture d'un interrupteur 23 disposé dans la liaison 17 entre le dispositif électronique de commande 16 et l'émetteur 4 (figure 6).

## Revendications

1. Missile (2) pourvu d'un émetteur (4) d'impulsions lumineuses (5) adressées à un récepteur (6) disposé à poste fixe (1), ledit missile (2) s'éloignant dudit récepteur (6) tout en étant animé d'un mouvement de rotation (3) autour de son axe longitudinal (L-L),
**caractérisé en ce qu'**il comporte des moyens (15, 18 à 23) pour interrompre lesdites impulsions lumineuses (5) lorsque ledit mouvement de rotation dudit missile (2) cesse.

2. Missile selon la revendication 1,
**caractérisé en ce que** lesdits moyens (15, 18, 19, 20) d'interruption des impulsions lumineuses (5) masquent ces dernières.

3. Missile selon la revendication 1,
**caractérisé en ce que** lesdits moyens (15, 18, 19, 21, 22, 23) d'interruption des impulsions lumineuses (5) arrêtent le fonctionnement dudit émetteur (4).

4. Missile selon la revendication 3, dans lequel ledit émetteur (4) est commandé par un dispositif électronique de commande (16),
**caractérisé en ce que** lesdits moyens (15, 18, 19, 21) d'interruption des impulsions lumineuses (5) arrêtent le fonctionnement dudit dispositif électronique de commande (16).

5. Missile selon la revendication 3, dans lequel ledit émetteur (4) est commandé par un dispositif électronique de commande (16),
**caractérisé en ce que** lesdits moyens (15, 18, 19, 23) d'interruption des impulsions lumineuses (5) inhibent la liaison de commande (17) entre ledit dispositif électronique (16) et ledit émetteur (4).

6. Missile selon l'une des revendications 1 à 5, comportant un détecteur de roulis (8 à 13) dudit missile (2) émettant des impulsions de roulis (14) dont chacune d'elles correspond à une position angulaire précise dudit missile (2) autour de son axe longitudinal (L-L),
**caractérisé en ce que** ledit détecteur de roulis (8 à 13) commande lesdits moyens d'interruption desdites impulsions lumineuses (5).

7. Missile selon la revendication 6,
**caractérisé en ce que** lesdits moyens d'interruption des impulsions lumineuses (5) interrompent ces dernières avec retard par rapport à la détection de la première impulsion de roulis manquante (14M1).

8. Missile selon la revendication 7,
**caractérisé en ce que** lesdits moyens d'interruption des impulsions lumineuses (5) interrompent ces dernières après une durée (D) correspondant à au moins deux périodes (T) desdites impulsions de roulis (14), ladite durée étant comptée à partir de la dernière impulsion de roulis (1 4d) détectée par ledit détecteur de roulis (8 à 13).

9. Missile selon l'une des revendications 6 à 8,
**caractérisé en ce que** lesdits moyens (15, 18 à 23) d'interruption desdites impulsions lumineuses (5) comportent un compteur systématique (15) comptant en permanence à une fréquence supérieure à la fréquence desdites impulsions de roulis (14), **en ce que** ledit compteur systématique (15) est remis à zéro et réinitialisé par chaque impulsion de roulis qu'il reçoit et **en ce que**, en cas d'absence d'impulsion de roulis (14), ledit compteur systématique (15) émet un signal après le comptage jusqu'à un nombre prédéterminé, à partir de la dernière impulsion de roulis reçue (14d).

## Claims

1. A missive (2) provided with an emitter (4) of light pulses (5) addressed to a receiver (6) disposed at a fixed post (1), said missile (2) receding from said receiver (6) while being impressed with a rotational motion (3) about its longitudinal axis (L-L),
**characterized in that** it comprises means (15, 18 to 23) for interrupting said light pulses (5) when said rotational motion of said missile (2) stops.

2. The missile as claimed in claim 1,
**characterized in that** said means (15, 18, 19, 20) for interrupting the light pulses (5) mask the latter.

3. The missile as claimed in claim 1,
**characterized in that** said means (15, 18, 19, 21, 22, 23) for interrupting the light pulses (5) halt the operation of said emitter (4).

4. The missile as claimed in claim 3, in which said emitter (4) is controlled by an electronic control device (16),
**characterized in that** said means (15, 18, 19, 21) for interrupting the light pulses (5) halt the operation of said electronic control device (16).

5. The missile as claimed in claim 3, in which said emitter (4) is controlled by an electronic control device (16),
**characterized in that** said means (15, 18, 19, 23) for interrupting the light pulses (5) disable the control link (17) between said electronic device (16) and said emitter (4).

6. The missile as claimed in one of claims 1 to 5, comprising a roll detector (8 to 13) for said missile (2) emitting roll pulses (14) each of which corresponds to a specific angular position of said missile (2) about its longitudinal axis (L-L),
**characterized in that** said roll detector (8 to 13) controls said means for interrupting the said light pulses (5).

7. The missile as claimed in claim 6,
**characterized in that** said means for interrupting the light pulses (5) interrupt the latter with delay with respect to the detection of the first missing roll pulse (14M1).

8. The missile as claimed in claim 7,
**characterized in that** said means for interrupting the light pulses (5) interrupt the latter after a duration (D) corresponding to at least two periods (T) of said roll pulses (14), said duration being metered from the last roll pulse (14d) detected by said roll detector (8 to 13).

9. The missile as claimed in one of claims 6 to 8,
**characterized in that** said means (15, 18 to 23) for interrupting said light pulses (5) comprise a systematic meter (15) permanently metering at a higher frequency than the frequency of said roll pulses (14), **in that** said systematic meter (15) is reset to zero and reinitialized by each roll pulse that it receives and **in that**, in case of absence of roll pulse (14), said systematic meter (15) emits a signal after metering up to a predetermined number, starting from the last roll pulse received (14d).

## Patentansprüche

1. Flugkörper (2) mit einem Sender (4) von Lichtimpulsen (5), die an einen Empfänger (6) gerichtet werden, der an einem feststehenden Posten (1) angeordnet ist, wobei sich der Flugkörper (2) vom Empfänger (6) entfernt und dabei in eine Rotationsbewegung (3) um seine Längsachse (L-L) versetzt wird,
**dadurch gekennzeichnet, dass** er Mittel (15, 18 bis 23) umfasst, um die Lichtimpulse (5) zu unterbrechen, wenn die Rotationsbewegung des Flugkörpers (2) aufhört.

2. Flugkörper nach Anspruch 1,
**dadurch gekennzeichnet, dass** die Mittel (15, 18, 19, 20) zum Unterbrechen der Lichtimpulse (5) die Letztgenannten maskieren.

3. Flugkörper nach Anspruch 1,
**dadurch gekennzeichnet, dass** die Mittel (15, 18, 19, 21, 22, 23) zum Unterbrechen der Lichtimpulse (5) den Betrieb des Senders (4) stoppen.

4. Flugkörper nach Anspruch 3, wobei der Sender (4) durch eine elektronische Steuervorrichtung (16) gesteuert wird,
**dadurch gekennzeichnet, dass** die Mittel (15, 18, 19, 21) zum Unterbrechen der Lichtimpulse (5) den Betrieb der elektronischen Steuervorrichtung (16) stoppen.

5. Flugkörper nach Anspruch 3, wobei der Sender (4) durch eine elektronische Steuervorrichtung (16) gesteuert wird,
**dadurch gekennzeichnet, dass** die Mittel (15, 18, 19, 23) zum Unterbrechen der Lichtimpulse (5) die Steuerungsverbindung (17) zwischen der elektronischen Vorrichtung (16) und dem Sender (4) hemmen.

6. Flugkörper nach einem der Ansprüche 1 bis 5, umfassend einen Detektor für Rollbewegungen (8 bis 13) des Flugkörpers (2), der Rollbewegungsimpulse (14) aussendet, von denen jeder einer genauen Winkelposition des Flugkörpers (2) um seine Längsachse (L-L) entspricht,
**dadurch gekennzeichnet, dass** der Rollbewegungsdetektor (8 bis 13) die Mittel zum Unterbrechen der Lichtimpulse (5) steuert.

7. Flugkörper nach Anspruch 6,
**dadurch gekennzeichnet, dass** die Mittel zum Unterbrechen der Lichtimpulse (5) die Letztgenannten mit Verzögerung in Bezug auf die Feststellung des ersten fehlenden Rollbewegungsimpulses (14M1) unterbrechen.

8. Flugkörper nach Anspruch 7,
**dadurch gekennzeichnet, dass** die Mittel zum Unterbrechen der Lichtimpulse (5) die Letztgenannten nach einem Zeitraum (D) unterbrechen, der mindestens zwei Perioden (T) der Rollbewegungsimpulse (14) entspricht, wobei der Zeitraum ab dem letzten Rollbewegungsimpuls (14d) gerechnet wird, der vom Rollbewegungsdetektor (8 bis 13) festgestellt wurde.

9. Flugkörper nach einem der Ansprüche 6 bis 8,
**dadurch gekennzeichnet, dass** die Mittel (15, 18 bis 23) zum Unterbrechen der Lichtimpulse (5) einen systematischen Zähler (15) umfassen, der ständig mit einer Frequenz zählt, die höher ist als die Frequenz der Rollbewegungsimpulse (14), dass der systematische Zähler (15) durch jeden Rollbewegungsimpuls, den er empfängt, auf null gestellt und reinitialisiert wird, und dass bei Abwesenheit eines Rollbewegungsimpulses (14) der systematische Zähler (15) ein Signal aussendet, nachdem ab dem letzten empfangenen Rollbewegungsimpuls (14d) bis zu einer vorbestimmten Zahl gezählt wurde.
